# EUROPÄISCHE PATENTANMELDUNG

(11) **EP 1 166 612 A1**
(43) Veröffentlichungstag der Anmeldung: **02.01.2002**
(21) Anmeldenummer: 01113451.7
(22) Anmeldetag: 02.06.2001
(51) Int. Cl.: A01B 73/00, A01D 34/66

(54) **Landwirtschaftliches Gerät**

(30) Priorität: 20.06.2000 DE 10030255
(71) Anmelder: DEERE & COMPANY, Moline, Illinois 61265-8098 (US)
(72) Erfinder: Delmas, Jean, 70140 Valay (FR); Demesmay, David, 25000 Besancon (FR)
(74) Vertreter: Magin, Ludwig Bernhard

(57) **Zusammenfassung**

1. Landwirtschaftliches Gerät
2.1. Bekannte landwirtschaftliche Geräte werden in Abmessungen gebaut, die die zulässigen Maße für den Transport auf der Straße überschreiten. Es werden daher Teile des Geräts mit Scharnieren oder dergleichen angeschlossen, damit sie in eine Stellung gebracht werden können, in der die Außenabmessungen innerhalb der zulässigen Maße liegen. Je nach der Transportrichtung werden Teile an der Rückseite oder an der Seite entsprechend angebracht.
2.2. Das erfindungsgemäße Gerät (10) wird in eine Funktionsbaugruppe (18) und Anbauten (20) unterteilt, die in Schnittstellen miteinander beweglich oder lösbar verbunden sind. Die Schnittstellen (22) befinden sich innerhalb der zulässigen Transportabmessungen.
2.3. Landwirtschaftliche Geräte werden gewerblich hergestellt und in der Landwirtschaft eingesetzt.

## Beschreibung

Die Erfindung betrifft ein landwirtschaftliches Gerät mit einer Transportvorrichtung für den Transport in Längs- und Querstellung und mit einem Aufbau.

Der Prospekt "KRONE Großflächenmähwerke TM 4/270 und TM 4/330, Druckvermerk 565 - 7 - 3.72" zeigt ein landwirtschaftliches Mähgerät mit einer seitlich angelenkten Deichsel und einem Fahrgestell mit horizontal schwenkbaren Rädern, die gemeinsam es erlauben, daß das Mähgerät sowohl schräg hinter einem Ackerschlepper als auch quer zu diesem transportiert werden kann. Um bei der Fahrt auf öffentlichen Straßen die zulässigen Maße einzuhalten, wird eine Auswurfhaube nach oben geklappt.

Der Prospekt "Kverneland Taarup, 4024 / 4028 / 4032 / 4036/ 13269 / 1099 Norgard Mikkelsen A/S" zeigt ebenfalls ein gezogenes Mähwerk. Dieses Mähwerk enthält seitliche Schutze, die für den Transport auf der Straße nach oben geklappt werden, um die zulässige Straßentransportbreite zu erreichen.

Das der Erfindung zugrunde liegende Problem wird darin gesehen, daß landwirtschaftliche Geräte in immer größer werdenden Dimensionen hergestellt werden, während die zulässigen Transportabmessungen von 3 Metern bei gezogenen Geräten unverändert bleiben. Auch der Transport längs hinter einem Zugfahrzeug auf einem Anhänger läßt den Transport von Maschinen mit einer Breite von mehr als 2,55 innerhalb Deutschlands nicht zu.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird eine klare Lehre für die Konstruktion eines solchen Geräts angegeben. Mit Hilfe dieser Lehre kann ein Raster über die Erstreckung des Geräts gemäß der Draufsicht gelegt werden, das die maximale Erstreckung und somit den weitestmöglichen Verlauf der Schnittstellen anzeigt. Die Schnittstellen können also entlang des Rasters oder innerhalb der von ihm maximal zugelassenen Begrenzung gezogen werden. Anders als im Stand der Technik werden somit keine Einzelmaßnahmen dort vorgenommen, wo die Transportabmessungen überschritten werden, sondern das Gerät wird von vornherein in eine Zone innerhalb und außerhalb der Transportabmessungen unterteilt. Ein solches Gerät kann sowohl quer zur Fahrtrichtung hinter dem Zugfahrzeug als auch längs zur oder in der Fahrtrichtung auf einem Anhänger transportiert werden.

Es ist zwar auch möglich, einen Aufbau mit Werkzeugen, z. B. Mähbalken, Zinkenkreisel, Aufbereitungswerkzeugen, etc. zu teilen; dies bedingt jedoch einen hohen baulichen Aufwand. Es ist technisch einfacher und kostengünstiger, die Schnittstellen im Anschlußbereich von einfachen Anbauten wie Halmteilern, Streublechen, Schutzen, etc. zu legen.

Die Umstellung auf Transportfahrt kann dann schnell bewerkstelligt werden, wenn Scharniere, Gelenke, oder dergleichen vorgesehen sind, so daß keine Zerlegung erforderlich ist.

Eine Demontage ist dort sinnvoll, wo der außerhalb der zulässigen Transportabmessung liegende Teil schwer oder groß ist und separat besser transportiert werden kann.

Die Verwendung von Stellvorrichtungen macht es möglich, das Gerät ferngesteuert, z. B. von einem Ackerschlepper aus, in die Transport- oder Betriebsstellung zu bringen.

Schnittstellen können dort problematisch werden, wo sie mit Hilfe von Wänden Material, z. B. gemähtes Gras fördern oder eine Schutzwirkung entfalten müssen. In einem solchen Fall kann die volle Funktion aufrechterhalten werden, wenn die Wand in Abschnitte aufgeteilt wird, die sich überlappen oder überkreuzen und somit einen durch die Schnittstelle entstehenden Spalt verschließen.

Die aus Abschnitten bestehende Wand bietet Schutz gegen geschleuderte Teile und kann sich doch den jeweiligen Gegebenheiten anpassen, bzw. beim Wegbewegen des entsprechenden Anbaus eine flache Bauweise einnehmen, wenn sie aus einem festen und dennoch beweglichen, nachgiebigen Stoff, z. B. Kunststoff hergestellt ist, der gegebenenfalls teilweise mit einem festen Träger verbunden sein kann.

Die Erfindung ist nicht auf die Verwendung an einem gezogenen Gerät beschränkt, sondern kann auch im Zusammenhang mit einem angebauten oder aufgesattelten Gerät verwendet werden, das in eine Quer- und eine Längsstellung gebracht werden kann. Dennoch bietet eine um ca. 90 Grad schwenkbare Deichsel den Vorteil, daß sie auch bei dem Transport des Geräts auf einem Anhänger die Verbindung zu dem Zugfahrzeug herstellen kann, so daß ein Umhängen des Geräts nicht erforderlich ist.

Da die Räder, insbesondere die Reifen, des Geräts nicht mit einer Schnittstelle versehen werden können, werden die kleinsten erreichbaren Abmessungen dadurch erreicht, daß die Schnittstelle oder Schnittstellen mit möglichst wenig Abstand zu den Rädern verlaufen. Wenn sich die Räder innerhalb der Umrisses des Funktionsbaugruppe befinden, können auch die Ecken der Funktionsbaugruppe den Verlauf der Schnittstellen markieren. In wieder einer anderen Bauweise kann auch das Chassis selbst die Schnittstelle definieren, wenn es eine Teilung in feste und bewegliche Komponenten nur außerhalb seiner Außenabmessung zuläßt.

Mähaufbereiter sind häufig Maschinen, die sowohl längs der wie auch quer zu der Fahrtrichtung eine Abmessung aufweisen, die über der maximal zulässigen Straßenverkehrsbreite liegt. Da diese Geräte immer größer gebaut werden und zu dem Feld hin bzw. von diesem weg transportiert werden müssen, führt die Anwendung der Erfindung an diesen Geräten zu einem hohen wirtschaftliche Nutzen.

In der Zeichnung ist ein nachfolgend näher beschriebenes Ausführungsbeispiel der Erfindung dargestellt. Es zeigt:
- Fig. 1: ein landwirtschaftliches Gerät in Draufsicht und quer zur Fahrtrichtung ausgerichtet,
- Fig. 2: das Gerät längs der Fahrtrichtung auf einem Anhänger,
- Fig. 3: einen vorderen linken Eckbereich des Geräts mit einem Wandverlauf in einer ersten Ausführungsform in schematischer Darstellung und in Draufsicht und
- Fig. 4: den linken Eckbereich aus Figur 3 mit einem Wandverlauf in einer zweiten Ausführungsform.

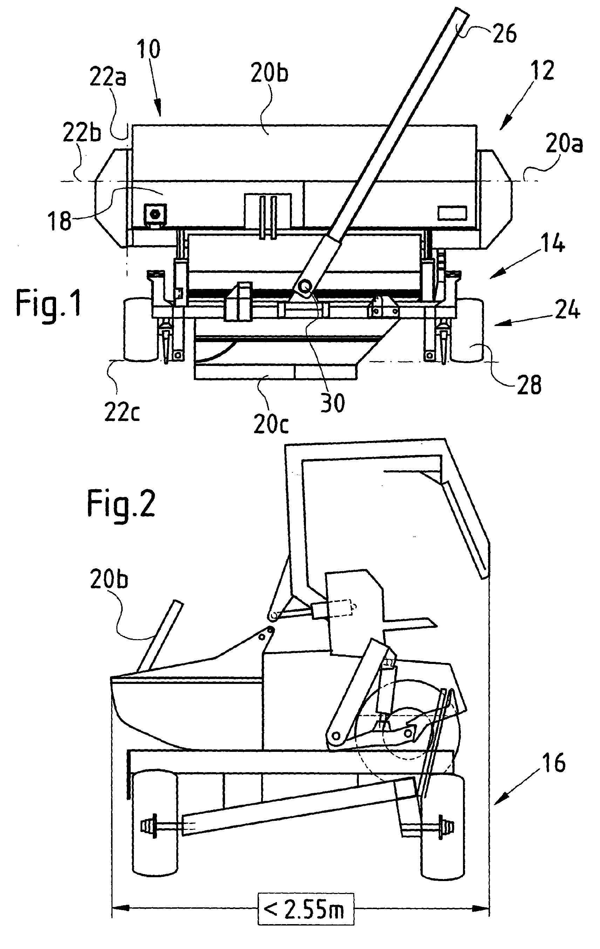

Figur 1 zeigt ein gezogenes landwirtschaftliches Gerät 10 mit einem Aufbau 12 und einer Transportvorrichtung 14.

Das Gerät 10 ist als ein Mähaufbereiter dargestellt, der von einem nicht gezeigten Ackerschlepper zum Transport auf der Straße und zum Betrieb auf einem Feld gezogen werden kann. Das Gerät 10 kann aber auch als ein Mähgerät, als ein Bodenbearbeitungsgerät, ein Heuwerbungsgerät oder dergleichen ausgebildet sein. Derartige Geräte 10 nehmen heutzutage eine Breite ein, die quer zu und/oder in der Fahrtrichtung des Ackerschleppers die zulässigen Abmessungen für den Transport auf der Straße überschreitet. Diese Abmessungen betragen 3 m, wenn es hinter dem Ackerschlepper auf den eigenen Rädern gezogen wird, und 2,55 m, wenn das in Längsrichtung auf einem Anhänger 16 - sh. Figur 2 - transportiert wird. Im folgenden wird der Begriff "Breite" für die Erstreckung des Gerätes 10 von links nach rechts in Figur 1 verwendet, während "Tiefe" die Abmessung des Geräts 10 von links nach rechts in Figur 2 oder von oben nach unten in Figur 1 bedeutet. Die Breite heutiger Mähaufbereiter kann z. B. 4,5 m betragen.

Der Aufbau 12 enthält eine Funktionsbaugruppe 18 und Anbauten 20 (allgemein), 20a (Seitenschutze), 20b (Vorderwand) und/oder 20c (Haube).

Die Funktionsbaugruppe 18 steht in dem bevorzugten Ausführungsbeispiel für einen Zusammenbau eines nicht gezeigten Mähbalkens und einer Aufbereitungseinheit, die z. B. als über Kopf fördernder Rotor ausgebildet ist. Funktionsbaugruppe 18 steht im allgemeinen für denjenigen Zusammenbau des Geräts 10, in dem sich die wesentlichen Funktionselemente befinden und der schwer in kurzer Zeit in Einzelteile zerlegt werden kann. Diese Funktionsbaugruppe 18 ist so ausgebildet, daß sich ihre Breite und/oder Tiefe innerhalb der zulässigen Transportabmessungen erstrecken, so daß das Gerät 10 zumindest entweder in der Richtung gemäß Figur 1 oder in der gemäß Figur 2 transportiert werden kann. Bei bestimmten Geräten 10 wird ein Transport in beiden Ausrichtungen möglich sein.

Die Anbauten 20 sind die Teile, die zwar in Wirkverbindung mit der Funktionsbaugruppe 18 stehen, aber eine untergeordnete Funktion ausüben, leicht und einfach ausgebildet und schnell beweglich oder demontierbar sind. Folglich gehören seitliche Schutze 20a, eine vordere oberen Wand 20b zum Niederdrücken des Mähguts und ein Teil einer rückwärtigen Haube 20c zu den Anbauten. Darüber hinaus kämen auch andere Teile in Betracht, z. B. ein in Figur 2 in der Transportstellung gezeigter Seitenförderer für Mähgut. Bei anderen Gerätearten kann es sich um Schutze, Gestänge oder dergleichen handeln.

Zwischen dem Funktionsmodul 18 und den Anbauten 20 sind Schnittstellen 22 vorgesehen, von denen seitliche Schnittstellen als 22a, eine vordere Schnittstelle als 22b und eine rückwärtige als 22c bezeichnet wird. Jede Schnittstelle 22 ist mit einer unterbrochenen Linie dargestellt, die z. B. für die Gelenkachse eines Scharniers stehen kann. Je nach der Art und der Lage der Anbauten 20 kann die Schnittstelle 22 auch weiter dem Mittelpunkt der Funktionsbaugruppe 18 zugelegen sein.

Die Schnittstellen 22 erlauben eine Demontage oder Verstellung der außerhalb der Schnittstellen 22 liegenden Anbauten 20 gegenüber der innerhalb der Schnittstellen 22 gelegenen Funktionsbaugruppe 18. So können die beiden Anbauten 20a um die seitlichen Schnittstellen 22a und/oder der vordere Anbau 20b (Wand) und/oder der rückwärtige Anbau 20c (Haube) nach oben oder unten geklappt werden und reduzieren auf diese Weise die Breite bzw. die Tiefe des Geräts 10.

Die Transportvorrichtung 14 enthält in diesem Ausführungsbeispiel ein Fahrgestell 24 und eine Deichsel 26.

Mit Hilfe des Fahrgestells 24, das nur bei dem bevorzugten Ausführungsbeispiel vorhanden ist, kann das Gerät 10 auf eigenen Rädern 28 hinter dem Ackerschlepper gezogen werden, wobei die Verbindung über die Deichsel 26 erfolgt.

Die Deichsel 26 greift ungefähr in der Mitte, d. h. auf der halben Breite des Fahrgestells 24 an diesem in einem Lager 30 horizontal schwenkbar an. Das Schwenkvermögen der Deichsel 26 ist so groß, daß bei dem bevorzugten Ausführungsbeispiel ein Transport sowohl gemäß Fig. 1, wie auch gemäß Fig. 2 möglich ist. In anderen Ausführungsbeispielen reicht es aus, wenn die Deichsel 26 einen Transport gemäß Figur 1 oder Figur 2 ermöglicht.

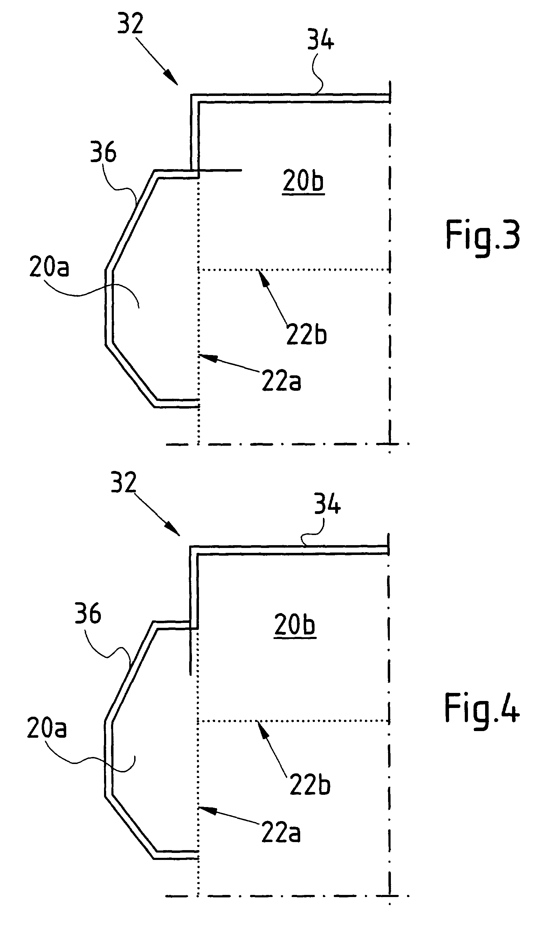

Im Falle der bevorzugten Ausführungsform des Geräts 10 als Mähaufbereiter ist im Bereich der Anbauten 20a und 20b eine vertikale Wand 32 vorgesehen, wie sie in den Figuren 3 und 4 dargestellt ist und die sich in einen vorderen Abschnitt 34 und einen seitlichen Abschnitt 36 unterteilt.

Die Wand 32 hat die Aufgabe, den vorderen Arbeitsbereich der Funktionsbaugruppe 18 nach außen abzuschirmen, so daß von den Werkzeugen weggeschleuderte Steine, Äste oder gar Werkzeugteile abgefangen werden. Diese Wand 32 muß daher auch im Bereich der Schnittstellen 22 geschlossen sein und erforderlichenfalls eigene Schnittstellen aufweisen, die die Bewegung der Anbauten 20 gegenüber der Funktionsbaugruppe 18 zulassen. In dem bevorzugten Ausführungsbeispiel ist die Wand 32 als eine Kunststoffschürze aus hochfestem flexiblen Material gebildet, die senkrecht herabhängt und an den festen und tragfähigen Anbauten 20 befestigt ist. Die Kunststoffschürze ist auf nicht gezeigte Weise an einer Stange, einem Rahmen oder dergleichen aufgehängt.

Die Ausbildungen nach den Figuren 3 und 4 unterscheiden sich in der Art, wie der vordere und der seitliche Abschnitt 34 und 36 aufeinander stoßen.

Bei der Ausführungsform nach Figur 3 erstreckt sich der um mehrere Kanten geführte seitliche Abschnitt 36 im wesentlichen von hinten nach vorne, endet schließlich in einem Verlauf parallel zur wesentlichen Erstreckung des Anbaus 20b und des vorderen Abschnitts 34 und deckt sich mit diesem teilweise. Folglich endet der seitliche Abschnitt 36 unterhalb des Anbaus 20b, der vorderen waagrechten Wand. Beide Abschnitte 34 und 36 stehen dort unter einem Winkel von 90 Grad.

Bei der Ausführung nach Figur 4 erstreckt sich der seitliche Abschnitt 36 des seitlichen Anbaus 20a nur über dessen freiliegende Peripherie und endet an dem vorderen Abschnitt 34. Der vordere Abschnitt 34 erstreckt sich in der Tiefe über die Vorderkante des seitlichen Abschnitts 36 und überlappt diesen zu ca. einem Fünftel. In diesem Fall steht der Endbereich des seitlichen Abschnitts 36 senkrecht auf dem vorüberführenden Endbereich des vorderen Abschnitts 34.

Mit beiden Ausführungsformen wird erreicht, daß die Anbauten 20a und 20b um die jeweiligen Schnittstellen 22a und 22b geschwenkt werden können und während des Betriebs eine geschlossene Wand 32 vorliegt.

## Patentansprüche

1. Landwirtschaftliches Gerät (10) mit einer Transportvorrichtung (14) für den Transport in Längs- und Querstellung und mit einem Aufbau (12), **gekennzeichnet durch** Schnittstellen (22) an dem Aufbau (12) innerhalb der oder an den maximal zulässigen Abmessungen für den Transport des Geräts (10) auf öffentlichen Straßen in der jeweiligen Transportstellung.

2. Landwirtschaftliches Gerät nach Anspruch 1, **dadurch gekennzeichnet, daß** der Aufbau (12) eine Funktionsbaugruppe (18) und wenigstens einen Anbau (20) enthält, zwischen denen sich die Schnittstellen (22) befinden.

3. Landwirtschaftliches Gerät nach Anspruch 1 oder 2, **dadurch gekennzeichnet, daß** die Schnittstellen (22) Scharniere enthalten.

4. Landwirtschaftliches Gerät nach einem oder mehreren der vorherigen Ansprüche, **dadurch gekennzeichnet, daß** wenigstens eine Schnittstelle (22) eine lösbare Verbindung aufweist.

5. Landwirtschaftliches Gerät nach einem oder mehreren der vorherigen Ansprüche, **dadurch gekennzeichnet, daß** die Teile diesseits und jenseits der Schnittstelle (22) über Stellvorrichtungen miteinander verbunden sind.

6. Landwirtschaftliches Gerät nach einem oder mehreren der vorherigen Ansprüche, **dadurch gekennzeichnet, daß** Abschnitte (34, 36) einer vertikalen Wand (32) an einem oder mehreren Anbauten (20) im Bereich der Schnittstellen (22) getrennt und sich bereichsweise überlappend oder kreuzend ausgebildet sind.

7. Landwirtschaftliches Gerät nach Anspruch 6, **dadurch gekennzeichnet, daß** die Abschnitte (34, 36) im wesentlichen aus einem reißfesten, flexiblen Material, insbesondere Kunststoff, gebildet sind.

8. Landwirtschaftliches Gerät nach einem oder mehreren der vorherigen Ansprüche, **gekennzeichnet durch** ein Fahrgestell (24) und eine an dieses angeschlossene Deichsel (26), die aus einer Richtung in der Längsrichtung des Geräts (10) in eine Richtung quer zu dem Gerät (10) horizontal schwenkbar ist.

9. Landwirtschaftliches Gerät nach einem oder mehreren der vorherigen Ansprüche, **dadurch gekennzeichnet, daß** die äußerste Kante der Räder (28), des Fahrgestells (24) oder der Funktionsbaugruppe (18) im wesentlichen im Kreuzungspunkt der Ebenen zweier Schnittstellen 22 liegt.

10. Gezogenes landwirtschaftliches Gerät nach einem oder mehreren der vorherigen Ansprüche, **dadurch gekennzeichnet, daß** es sich um einen Mähaufbereiter handelt.
